# EUROPEAN PATENT SPECIFICATION

(11) **EP 2 025 566 B1**
(45) Date of publication and mention of the grant of the patent: **05.10.2022**
(21) Application number: 08014229.2
(22) Date of filing: 08.08.2008
(51) Int. Cl.: B60R 25/04, G06F 21/88, G06F 21/44, G06F 21/30, H04L 9/40, H04L 67/12

(54) **Control method for authentication and control device for boat**
Steuerungsverfahren für Authentifizierung und Steuerungsvorrichtung für ein Boot
Procédé de contrôle pour l'authentification et dispositif de commande de bateau

(30) Priority: 10.08.2007 JP 2007209940
(43) Date of publication of application: 18.02.2009
(73) Proprietor: Yamaha Hatsudoki Kabushiki Kaisha, Shizuoka-ken Shizuoka 438-8501 (JP)
(72) Inventor: Okuyama, Takashi, Shizuoka-ken 432-8058 (JP)
(74) Representative: Grünecker Patent- und Rechtsanwälte PartG mbB

(56) References cited:
- US-A1- 2003 093 196
- US-A1- 2004 003 233
- US-A1- 2006 288 413

## Description

The present invention relates to a control method for authentication and a control device for a boat. Prior art document US 2004/003233 A1 discloses a control method for authentication of a connection device connected to a network, in particular a network mounted on a boat, comprising performing an authenticating action with the connection device. Said prior art document is directed to a method and system for a vehicle subassembly authentication of a component. Said authentication is carried out on basis of a cryptographic key containing within the component and adapted to cooperate with a vehicle cryptographic unit. It is a special advantage of the teaching of said prior art document to provide a method and system for a vehicle subassembly authentication of a component in case such component is not predesignated for use with a respective subassembly. Prior art document US 2006/288413 A1 refers to an intrusion detection and prevention system and also discloses an authentication function. Prior art document US 2003/093196 A refers to a water craft network and discusses communication within said network.

Conventionally, when a connection device is connected to the above type of network, an authenticating action is made to the connection device so as to let the connection device function normally on the network N as disclosed in JP-A-2004-252823.

The above method, however, has had a problem that, because the authenticating action is made across the board irrespective of the manufacturer or device class of the connection device, it has been impossible to handle specific connection devices as authentication-free.

It is an objective of the present invention to provide a control method for authentication and a control device for a boat capable of facilitating the authentication of specific connection devices.

According to the present invention, said objective is solved by a control method for authentication having the features of independent claim 1. Preferred embodiments are laid down in the dependent claims.

Accordingly , it is provided a control method for authentication of a connection device connected to a network, in particular a network mounted on a boat, comprising the steps of: performing an authentication-free determination to determine whether or not the connection device corresponds to an authentication-free device, performing an authenticating action with the connection device if the connection device does not correspond to an authentication-free device, and exempting the connection device from the authenticating action if the connection device corresponds to an authentication-free device.

Accordingly, when a connection device is connected to a network, an authenticating action is made if the connection device does not correspond to an authentication-free device. Meanwhile, the connection device is exempted from the authenticating action if the connection device corresponds to an authentication-free device. As a result, it is possible to handle specific connection devices (authentication-free devices) as authentication-free.

In the authentication-free determination, it is determined whether or not the connection device corresponds to an authentication-free device based on a manufacturer code representing the manufacturer of the connection device.

Accordingly, because the authentication-free determination is made on the basis of the manufacturer code, the connection device is handled as authentication-free when the connection device is manufactured by a specific manufacturer.

The connection device is instructed to transmit an address requesting message before the authentication-free determination is performed.

The address requesting message comprises an identification field comprising priority and/or communication identification and/or destination address and/or source address.

The address requesting message comprises a data field comprising manufacturer code and/or device classes and/or device functions.

Preferably if the connection device does not correspond to an authentication-free device, a seed value is sent to the connection device to perform a key reception check.

Preferably, it is determined whether or not the received key is correct by comparing said key to the seed value sent before.

Further, preferably data communication with the connection device is prohibited, if the key is incorrect.

According to the present invention, the aforesaid objective is solved by a control device for a boat, said control device being configured to perform a control method according to one of the aforesaid embodiments.

Accordingly, it is possible, when a connection device is connected to a network, to make an authenticating action if the connection device does not correspond to an authentication-free device, and to exempt the connection device (authentication-free device) from the authenticating action if the connection device corresponds to an authentication-free device. Therefore, it is possible to handle specific devices (authentication-free devices) as authentication-free.

Moreover, preferably because it is possible to make the authentication-free determination on the basis of the manufacturer code, it is possible to handle the connection device as authentication-free when the connection device is manufactured by the specific manufacturer.

Preferably, the control device comprises an electronic control unit with a device determination means, an authentication executing means, and an authentication exempting means.

There is further provided a motor for a boat, said motor having a control device according to one of the aforesaid embodiments.

Preferably, the motor is an outboard motor unit which, preferably, is configured to be detachably attached to a rear part of a boat.

According to a preferred embodiment, the boat has a network and an aforesaid control device, or an aforesaid motor connected to the network, said control device or motor performing authentication of a connection device connected to the network according to one of the aforesaid embodiments.

For the boat, the same effects as above are obtained.

The connection device connected to the network is a gage and/or a gateway and/or a remote control and/or an immobilizer and/or a multi-function sensor.

Preferably a warning device is provided which is configured to indicate an incorrect authentication of the connection device.

In the following, the present invention is explained in greater detail by means of embodiments thereof in conjunction with the accompanying drawings, wherein:
- FIG. 1: is a schematic view of a boat related to the first embodiment;
- FIG. 2: is a block diagram of the engine ECU related to the same first embodiment;
- FIG. 3: is a flowchart of a device authentication control program related to the same first embodiment; and
- FIG. 4: is a schematic view exemplifying an address requesting message related to the same first embodiment.

Among others, the following reference signs are used:
1: boat
2: hull
3: hub
4: gage (connection device)
5: gateway (connection device)
6: outboard motor
7: remote control(connection device)
8: immobilizer (connection device)
9: multi-function sensor (connection device)
10: engine ECU (device authentication control device)
11: CPU (authentication exempting means)
12: determining section (device determining means)
13: authentication executing section (authentication executing means)
14: data communication section
15: program memory
20: mechanical cable
F1: identification field
F2: data field
M: address requesting message
N: network
PRG: device authentication control program

Embodiments will hereinafter be described.

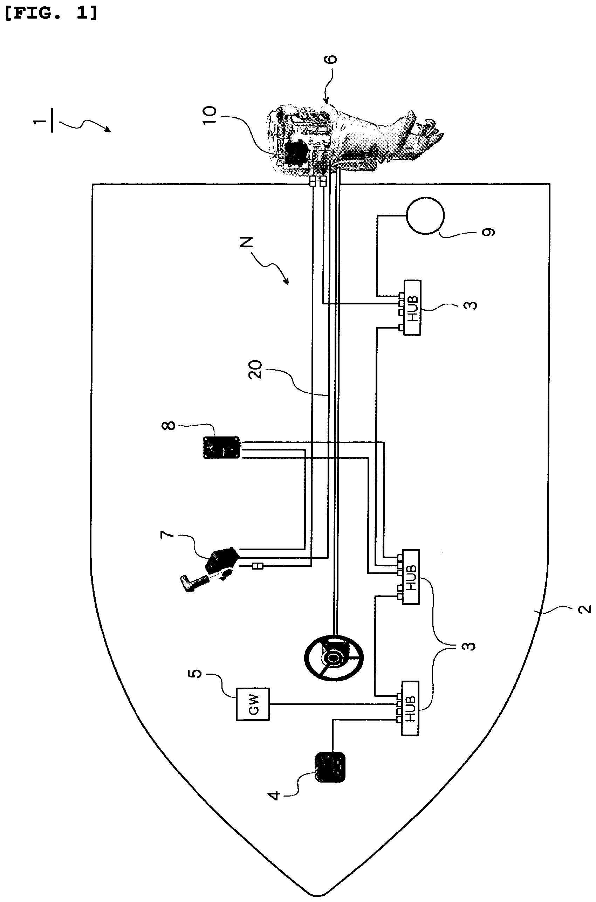

FIGs. 1 to 4 show a first embodiment.

The constitution will be described first. As shown in FIG. 1, a boat 1 has a hull 2. An outboard motor 6 is detachably attached to the rear part (stern) of the hull 2. The outboard motor 6 has a built-in engine electronic control unit ECU (device authentication control unit) 10. The hull 2 also has three hubs 3. Various connection devices: a gage 4, a gateway 5, a remote control 7, an immobilizer 8, and a multi-function sensor 9, are made connectable through these hubs 3 to a network N. The outboard motor 6 and the remote control 7 are interconnected through a type of connection using a mechanical cable.

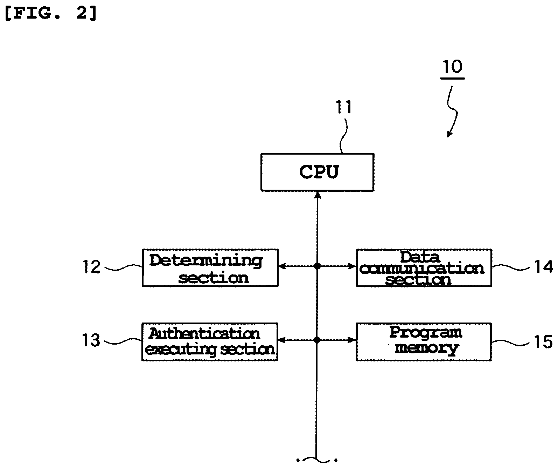

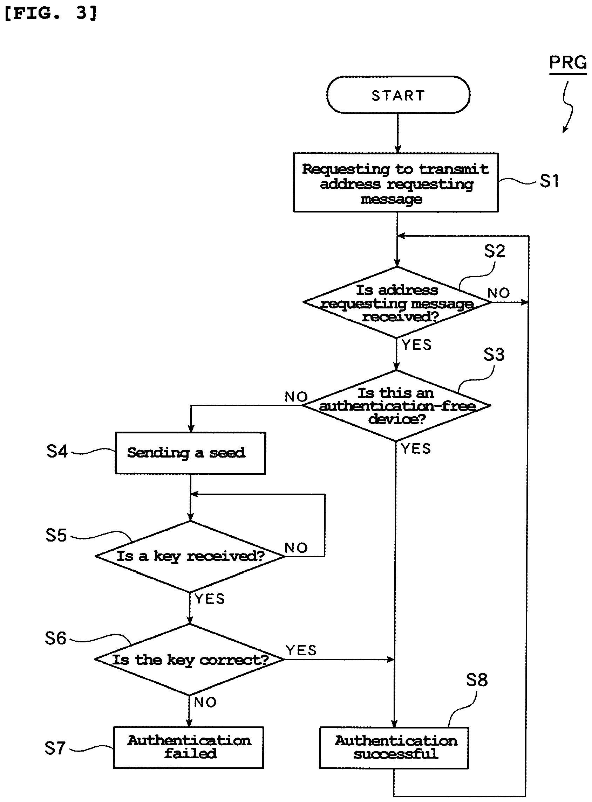

As shown in FIG. 2, the engine ECU 10 also has a CPU (authentication exempting means) 11 to which are connected: a determining section (device determining means) 12, an authentication executing section (authentication executing means) 13, a data communication section 14, and a program memory 15. Furthermore, the program memory 15 stores a device authentication control program PRG, which is shown in FIG. 3, to be freely readable.

Next will be described the functions.

As the boat 1 has the constitution as described above, when the gage 4 is connected to the network N, a central processing unit CPU 11 of the engine ECU 10 reads out the device authentication control program PRG shown in FIG. 3 from the program memory 15, and executes the device authentication control action according to the above-mentioned device authentication control program PRG as described below.

First, the CPU 11 instructs the data communication section 14 to request for transmission of an address requesting message M to the gage 4. Accordingly, the data communication section 14, through the network N, requests the gage 4 to transmit the address requesting message M (step S1 of the device authentication control program PRG).

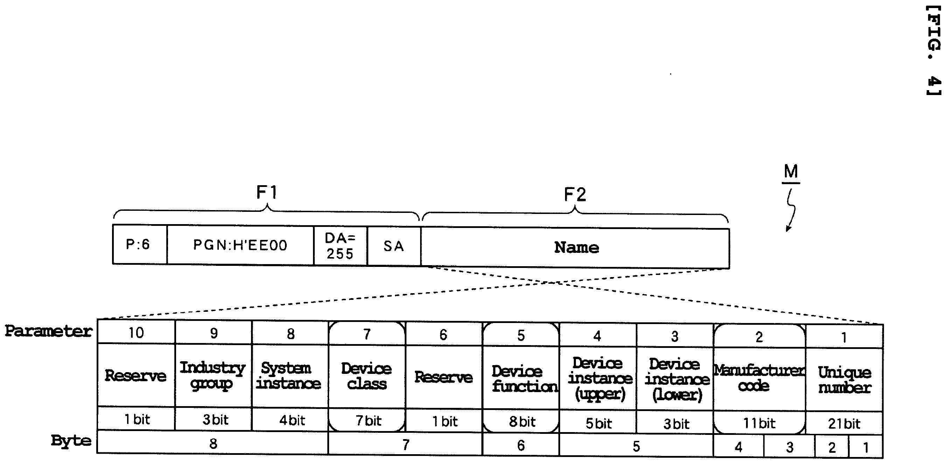

The address requesting message M is made up, as shown in FIG. 4, of an identification field F1 and a data field F2. In the identification field F1 are stored identification information such as P (priority), PGN (communication ID), DA (destination address), and SA (source address). In the data field F2 are stored various kinds of device information such as manufacturer codes, device classes, and device functions. Here, the term "manufacturer code" is a dedicated number (such as "1862") representing the manufacturer of the gage 4.

Then, the gage 4, in response to the request, transmits the address requesting message M through the network N to the data communication section 14. Then, the data communication section 14 checks the reception of the address requesting message M (step S2 of the device authentication control program PRG).

Then, the data communication section 14, upon receipt of the address requesting message M, outputs a signal to that effect to the CPU 11. Then, the CPU 11 instructs a determining section 12 to make an authentication-free determination for the gage 4. Upon receipt of this, the determining section 12, based on the manufacturer code in the address requesting message M, makes a determination of whether or not the gage 4 corresponds to an authentication-free device; in other words, an authentication-free determination (step S3 of the device authentication control program PRG). Here, the authentication-free device means a connection device manufactured by a specific manufacturer.

In other words, when the manufacturer code in the address requesting message M matches a specific number, the gage 4 is deemed to have been manufactured by the manufacturer corresponding to the specific number. Accordingly, the gage 4 is determined to correspond to the authentication-free device. On the contrary, when the manufacturer code in the address requesting message M does not match the specific number, the gage 4 is deemed not to have been manufactured by the manufacturer corresponding to the specific number. Accordingly, the gage 4 is determined not to correspond to the authentication-free device.

The determining section 12, when it determines that the gage 4 does not correspond to an authentication-free device, outputs a signal to that effect to the CPU 11. Then, the CPU 11 instructs the authentication executing section 13 to make an authenticating action for the gage 4. Upon receipt of this, the authentication executing section 13 makes the authenticating action for the gage 4.

In other words, the authentication executing section 13 transmits a seed (seed value) through the network 4 to the gage 4 (step S4 of the device authentication control program PRG) to make a key reception check (step S5 of the device authentication control program PRG). Upon receipt of the key, the authentication executing section 13 makes a determination of whether or not the key is correct (whether or not it corresponds to the above seed) (step S6 of the device authentication control program PRG).

When the key is determined to be correct as a result, the authentication executing section 13 outputs a signal to that effect to the CPU 11. Then the CPU 11 recognizes a successful authentication and permits unlimited communication with the gage 4 (step S8 of the device authentication control program PRG). As a result, the gage 4 becomes normally operative on the network N. When the key is determined to be incorrect as a result, the authentication executing section 13 outputs a signal to that effect to the CPU 11. Then the CPU 11 recognizes a failed authentication and causes a warning lamp (warning device) (not shown), which indicates abnormality in authentification, to light up while prohibiting data communication with the gage 4 (step S7 of the device authentication control program PRG). As a result, the gage 4 cannot function normally on the network N.

On the other hand, when the gage 4 is determined to correspond to an authentication-free device in the above-mentioned authentication-free determination (step S3 of the device authentication control program PRG), the determining section 12 outputs a signal to that effect to the CPU 11. Then the CPU exempts the gage 4 from an authenticating action (steps S4 to S6 of the device authentication control program PRG) to permit unlimited data communication with the gage 4. As a result, the gage 4 becomes normally operative on the network N even if it does not conform to an authentication compliant device (a connection device conformed to a protocol for executing authenification).

Here, the device authentication control action according to the device authentication control program PRG is terminated.

While the gage 4 is described here as an example of the connection device connected to the network N, also in the case a connection device other than the gage 4 (gateway 5, remote control 7, immobilizer 8, or multi-function sensor 9) is connected, the device authentication control action according to the device authentication control program PRG is made in a similar manner.

As described above, when a connection device such as the gage 4 is connected to the network N, and if it does not correspond to an authentication-free device, an authenticating action is made. In contrast, when the connection device corresponds to an authentication-free device, the device is exempted from the authenticating action. As a result, it is possible to handle specific connection devices (authentication-free devices) as authentication-free.

Furthermore, because the authentication-free determination is made according to the manufacturer code in the address requesting message M, when a connection device such as the gate 4 is one made by a specific manufacturer, the connection device may be handled as authentication-free.

The first embodiment above is described for the case in which an authentication-free determination is made on the basis of the manufacturer code in the address requesting message M while defining the authentication-free device to be a "connection device manufactured by a specific manufacturer." However, the definition of the authentication-free device is not limited to the above. For example, it is also possible to make an authentication-free determination based on the device class contained in the address requesting message M while defining the authentication-free device to be a "connection device belonging to a specific device class".

The first embodiment above is also described for the boat 1 in which the outboard motor 6 is connected to the remote control 7 by a connecting method using the mechanical cable 20. For example, it is also possible, as a matter of course, to apply this teaching to a boat 1 of a DBW (drive-by-wire) type in which the engine ECU 10 is electrically connected to the ECU of the remote control 7 through a LAN (Local Area Network). In particular with the boat 1 employing the DBW type, it is also possible that the ECU of the remote control 7 in place of the engine ECU 10 executes the device authentication control action.

Additionally, although the first embodiment above is described for the boat 1 in which the outboard motor 6 is attached to the hull 2, it is also possible, as a matter of course, to apply the teaching to a boat 1 in which a boat propelling device other than the outboard motor 6 (for example, an inboard-outboard motor) is attached to the hull 2.

This teaching above may be widely applied to various types of boats such as a pleasure boat, a small hydroplane, and a personal watercraft.

## Claims

1. Control method for authentication of a connection device (4,5,7,8,9) connected to a network (N), in particular a network (N) mounted on a boat (1), comprising the steps of:
performing an authentication-free determination (S3) to determine whether or not the connection device (4,5,7,8,9) corresponds to an authentication-free device, performing an authenticating action (S4 to S6) with the connection device (4,5,7,8,9) if the connection device (4,5,7,8,9) does not correspond to an authentication-free device (No at S3), and
exempting the connection device (4,5,7,8,9) from the authenticating action (S4 to S6) if the connection device (4,5,7,8,9) corresponds to an authentication-free device (Yes at S3), wherein the connection device (4,5,7,8,9) is instructed to transmit an address requesting message (M) before the authentication-free determination (S3) is performed, wherein the connection device (4,5,7,8,9) connected to the network (N) is a gage (4) and/or a gateway (5) and/or a remote control (7) and/or an immobilizer (8) and/or a multi-function sensor (9), and the address requesting message (M) comprises an identification field (F1) comprising priority (P) and/or communication identification (PGN) and/or destination address (DA) and/or source address (SA), and the address requesting message (M) comprises a data field (F2) comprising manufacturer code and/or device classes and/or device functions, wherein in the authentication-free determination, it is determined whether or not the connection device (4,5,7,8,9) corresponds to an authentication-free device based on a manufacturer code in the address requesting message (M) while defining the authentication-free device to be a connection device manufactured by a specific manufacturer representing the manufacturer of the connection device (4,5,7,8,9) or corresponds to an authentication-free device based on based on a device class contained in the address requesting message (M) while defining the authentication-free device to be a connection device belonging to a specific device class.

2. Control method according to claim 1, wherein, if the connection device (4,5,7,8,9) does not correspond to an authentication-free device, a seed value is sent to the connection device (4,5,7,8,9) to perform a key reception check (S4,S5).

3. Control method according to claim 2, wherein it is determined whether or not the received key is correct by comparing said key to the seed value sent before (S6).

4. Control method according to claim 3, wherein data communication with the connection device (4,5,7,8,9) is prohibited, if the key is incorrect (S7).

5. Control device for a boat (1), said control device being configured to perform a control method according to one of claims 1 to 4.

6. Control device according to claim 5, comprising an electronic control unit (10) with a device determination means (12), an authentication executing means (13), and an authentication exempting means (11).

7. Motor for a boat (1), said motor having a control device according to claim 5 or 6.

8. Motor according to claim 7, wherein the motor is an outboard motor unit (6) which, preferably, is configured to be detachably attached to a rear part of a boat (1).

9. Boat having a network (N) and a control device according to claim 5 or 6, or a motor according to claim 7 or 8, connected to the network (N), said control device or motor performing authentication of a connection device (4,5,7,8,9) connected to the network (N).

10. Boat according to claim 9, wherein a warning device is provided which is configured to indicate an incorrect authentication of the connection device (4,5,7,8,9).

## Patentansprüche

1. Steuerverfahren zur Authentifizierung einer Verbindungsvorrichtung (4,5,7,8,9), die mit einem Netzwerk (N), insbesondere einem Netzwerk (N), das auf einem Boot (1) montiert ist, verbunden ist, das die folgenden Schritte umfasst:
Durchführung einer authentifizierungsfreien Bestimmung (S3), um festzustellen, ob die Verbindungsvorrichtung (4,5,7,8,9) einer authentifizierungsfreien Einrichtung entspricht oder nicht,
Durchführen einer Authentifizierungsaktion (S4 bis S6) mit der Verbindungsvorrichtung (4,5,7,8,9), wenn die Verbindungsvorrichtung (4,5,7,8,9) nicht einer authentifizierungsfreien Vorrichtung (Nein bei S3) entspricht, und Ausnehmen der Verbindungsvorrichtung (4,5,7,8,9) von der Authentifizierungsaktion (S4 bis S6), wenn die Verbindungsvorrichtung (4,5,7,8,9) einer authentifizierungsfreien Einrichtung (Ja bei S3) entspricht, wobei die Verbindungsvorrichtung (4,5,7,8,9) angewiesen wird, eine Adressanforderungsnachricht (M) zu senden, bevor die authentifizierungsfreie Bestimmung (S3) durchgeführt wird, wobei die Verbindungsvorrichtung (4,5,7,8,9), die mit dem Netzwerk (N) verbunden ist, ein Anzeigeinstrument (4) und/oder ein Gateway (5) und/oder eine Fernbedienung (7) und/oder eine Wegfahrsperre (8) und/oder ein Multifunktionssensor (9) ist, und die Adressanforderungsnachricht (M) ein Identifikationsfeld (F1) umfasst, das eine Priorität (P) und/oder eine Kommunikationskennung (PGN) und/oder eine Zieladresse (DA) und/oder eine Quelladresse (SA) umfasst, und die Adressanforderungsnachricht (M) ein Datenfeld (F2) umfasst, das einen Herstellercode und/oder Vorrichtungsklassen und/oder Vorrichtungsfunktionen umfasst, wobei bei der authentifizierungsfreien Bestimmung festgestellt wird, ob die Verbindungsvorrichtung (4,5,7,8,9) einer authentifizierungsfreien Vorrichtung entspricht oder nicht, basierend auf einem Herstellercode in der Adressanforderungsnachricht (M), während die authentifizierungsfreie Vorrichtung als eine Verbindungsvorrichtung definiert wird, das von einem spezifischen Hersteller hergestellt wird, der den Hersteller der Verbindungsvorrichtung (4,5,7,8,9) repräsentiert, oder einer authentifizierungsfreien Vorrichtung entspricht, basierend auf einer Vorrichtungsklasse, die in der Adressanforderungsnachricht (M) enthalten ist, während die authentifizierungsfreie Vorrichtung als eine Verbindungsvorrichtung definiert wird, das zu einer spezifischen Vorrichtungsklasse gehört.

2. Steuerverfahren gemäß Anspruch 1, wobei, wenn die Verbindungsvorrichtung (4,5,7,8,9) nicht einer authentifizierungsfreien Vorrichtung entspricht, ein Ausgangswert an die Verbindungsvorrichtung (4,5,7,8,9) gesendet wird, um eine Schlüssel-Empfangsprüfung (S4, S5) durchzuführen.

3. Steuerverfahren gemäß Anspruch 2, wobei bestimmt ist, ob der empfangene Schlüssel korrekt ist oder nicht, durch Vergleich des Schlüssels mit dem zuvor gesendeten Ausgangswert (S6).

4. Steuerverfahren gemäß Anspruch 3, wobei die Datenkommunikation mit der Verbindungsvorrichtung (4,5,7,8,9) verhindert wird, wenn der Schlüssel falsch ist (S7).

5. Steuervorrichtung für ein Boot (1), die Steuervorrichtung ist konfiguriert, um ein Steuerverfahren nach einem der Ansprüche 1 bis 4 durchzuführen.

6. Steuereinrichtung gemäß Anspruch 5, die eine elektronische Steuereinheit (10) mit einer Vorrichtungsbestimmungseinrichtung (12), eine Authentifizierung-Ausführungseinrichtung (13) und eine Authentifizierungs-Ausnehmungseinrichtung (11) umfasst.

7. Motor für ein Boot (1), dieser Motor hat eine Steuereinrichtung gemäß Anspruch 5 oder 6.

8. Motor gemäß Anspruch 7, wobei der Motor eine Außenbordmotoreinheit (6) ist, die vorzugsweise konfiguriert ist, um abnehmbar an einem hinteren Teil eines Bootes (1) angebracht zu werden.

9. Boot, das ein Netzwerk (N) und einer Steuervorrichtung gemäß Anspruch 5 oder 6 oder einen Motor gemäß Anspruch 7 oder 8 hat, die mit dem Netzwerk (N) verbunden sind, die Steuervorrichtung oder der Motor führen die Authentifizierung einer Verbindungsvorrichtung (4,5,7,8,9), die mit dem Netzwerk (N) verbunden ist durch.

10. Boot gemäß Anspruch 9, wobei eine Warneinrichtung vorgesehen ist, die konfiguriert ist, um eine fehlerhafte Authentifizierung der Verbindungsvorrichtung (4,5,7,8,9) anzuzeigen.

## Revendications

1. Procédé de commande pour l'authentification d'un dispositif de connexion (4, 5, 7, 8, 9) connecté à un réseau (N), en particulier un réseau (N) monté sur un bateau (1), comprenant les étapes consistant à :
effectuer une détermination sans authentification (S3) pour déterminer si le dispositif de connexion (4, 5, 7, 8, 9) correspond ou non à un dispositif sans authentification,
effectuer une action d'authentification (S4 à S6) avec le dispositif de connexion (4, 5, 7, 8, 9) si le dispositif de connexion (4, 5, 7, 8, 9) ne correspond pas à un dispositif sans authentification (Non en S3), et
exempter le dispositif de connexion (4, 5, 7, 8, 9) de l'action d'authentification (S4 à S6) si le dispositif de connexion (4, 5, 7, 8, 9) correspond à un dispositif sans authentification (Oui en S3), où le dispositif de connexion (4, 5, 7, 8, 9) reçoit l'instruction de transmettre un message de demande d'adresse (M) avant que la détermination sans authentification (S3) ne soit effectuée, où le dispositif de connexion (4, 5, 7, 8, 9) connecté au réseau (N) est une jauge (4) et/ou une passerelle (5) et/ou une télécommande (7) et/ou un dispositif antidémarrage (8) et/ou un capteur multifonction (9), et le message de demande d'adresse (M) comprend un champ d'identification (F1) comprenant une priorité (P) et/ou une identification de communication (PGN) et/ou une adresse de destination (DA) et/ou une adresse source (SA), et le message de demande d'adresse (M) comprend un champ de données (F2) comprenant un code de fabricant et/ou des classes de dispositif et/ou des fonctions de dispositif, où, dans la détermination sans authentification, il est déterminé si le dispositif de connexion (4, 5, 7, 8, 9) correspond ou non à un dispositif sans authentification sur la base d'un code de fabricant dans le message de demande d'adresse (M) tout en définissant le dispositif sans authentification comme étant un dispositif de connexion fabriqué par un fabricant spécifique représentant le fabricant du dispositif de connexion (4, 5, 7, 8, 9) ou correspond à un dispositif sans authentification sur la base d'une classe de dispositif contenue dans le message de demande d'adresse (M) tout en définissant le dispositif sans authentification comme étant un dispositif de connexion appartenant à une classe de dispositif spécifique.

2. Procédé de commande selon la revendication 1, dans lequel, si le dispositif de connexion (4, 5, 7, 8, 9) ne correspond pas à un dispositif sans authentification, une valeur de départ est envoyée au dispositif de connexion (4, 5, 7, 8, 9) pour effectuer une vérification de réception de clé (S4, S5).

3. Procédé de commande selon la revendication 2, dans lequel il est déterminé si la clé reçue est correcte ou non en comparant ladite clé à la valeur de départ envoyée auparavant (S6).

4. Procédé de commande selon la revendication 3, dans lequel la communication de données avec le dispositif de connexion (4, 5, 7, 8, 9) est interdite, si la clé est incorrecte (S7).

5. Dispositif de commande pour un bateau (1), ledit dispositif de commande étant configuré pour effectuer un procédé de commande selon l'une des revendications 1 à 4.

6. Dispositif de commande selon la revendication 5, comprenant une unité de commande électronique (10) avec un moyen de détermination de dispositif (12), un moyen d'exécution d'authentification (13) et un moyen d'exemption d'authentification (11).

7. Moteur pour un bateau (1), ledit moteur ayant un dispositif de commande selon la revendication 5 ou 6.

8. Moteur selon la revendication 7, dans lequel le moteur est un groupe moteur hors-bord (6) qui, de préférence, est configuré pour être fixé de manière amovible à une partie arrière d'un bateau (1).

9. Bateau ayant un réseau (N) et un dispositif de commande selon la revendication 5 ou 6, ou un moteur selon la revendication 7 ou 8, connecté au réseau (N), ledit dispositif de commande ou moteur effectuant l'authentification d'un dispositif de connexion (4, 5, 7, 8, 9) connecté au réseau (N).

10. Bateau selon la revendication 9, dans lequel un dispositif d'avertissement est prévu qui est configuré pour indiquer une authentification incorrecte du dispositif de connexion (4, 5, 7, 8, 9).
